# EUROPÄISCHE PATENTSCHRIFT

(11) **EP 0 635 181 B1**
(45) Veröffentlichungstag und Bekanntmachung des Hinweises auf die Patenterteilung: **15.01.1997**
(21) Anmeldenummer: 93905200.7
(22) Anmeldetag: 17.03.1993
(51) Int. Cl.: H04L 9/00

(54) **VERFAHREN ZUM ERKENNEN EINER UNBERECHTIGTEN WIEDEREINSPIELUNG BELIEBIGER VON EINEM SENDER ZU EINEM EMPFÄNGER ÜBERTRAGENER DATEN**
PROCESS FOR DETECTING UNAUTHORISED REINJECTION OF DATA SENT BY A TRANSMITTER TO A RECEIVER
DISPOSITIF PERMETTANT LA DETECTION DE LA REINJECTION NON AUTORISE DE DONNEES QUELCONQUES TRANSMISES DEPUIS UN EMETTEUR VERS UN RECEPTEUR

(30) Priorität: 09.04.1992 DE 4211989
(43) Veröffentlichungstag der Anmeldung: 25.01.1995
(73) Patentinhaber: SIEMENS AKTIENGESELLSCHAFT, 80333 München (DE)
(72) Erfinder: HOFFMANN, Gerhard, D-81547 München (DE); LUKAS, Klaus, D-81739 München (DE); LECHNER, Stephan, D-81737 München (DE); STEINER, Ferdinand, D-80539 München (DE); BAUMGÄRTNER, Helmut, D-81477 München (DE); LÖHMANN, Ekkehard, D-53227 Bonn (DE); LECLERC, Matthias, D-60318 Frankfurt (DE)
(86) Internationale Anmeldenummer: DE9300246
(87) Internationale Veröffentlichungsnummer: WO9321711

(56) Entgegenhaltungen:
- EP-A- 0 117 907
- EP-A- 0 197 392
- US-A- 4 281 215
- US-A- 4 578 530
- US-A- 4 853 962

## Beschreibung

Es ist bekannt, die von einem Sender zu einem Empfänger zu übertragenden Daten dadurch gegen unberechtigten Angriff zu schützen, daß die Daten verschlüsselt werden. Zum Beispiel ergibt sich aus H. Sedlak, U. Golze, Ein Public-Key-Code Kryptographie-Prozessor, Informationstechnik it, 28. Jahrgang, Heft 3/1986, Seite 157, 158 eine einführende Schilderung der Möglichkeiten der Sicherung von Daten, die von einem Sender zu einem Empfänger zu übertragen sind. Dabei kann sowohl der Sender als auch der Empfänger ein Rechner sein. Die Verschlüsselung oder Sicherung soll dazu führen, daß die Authenzität des Absenders sowie ein Manipulationsschutz der Nachricht oder der Daten erreicht wird. Dazu können die Nachrichten, die zu übertragen sind, verschlüsselt werden, z.B. nach einem asymmetrischen oder symmetrischen Verschlüsselungsverfahren. Asymmetrisch heißt dabei, daß zum Ver- und Entschlüsseln zwei verschiedene Schlüssel verwendet werden. Ebenso ist es möglich, sowohl bei Empfänger als auch bei Sender denselben Schlüssel zu verwenden, womit eine symmetrische Verschlüsselung erreicht wird. Bei den asymmetrischen Verfahren ist es möglich, daß ein Schlüssel sich nicht ohne Zusatzinformationen aus dem anderen Schlüssel berechnen läßt. Deshalb kann einer der beiden Schlüssel veröffentlicht werden. Dieses Verfahren wird auch Public-Key-Verfahren genannt.

Die zu übertragende Nachricht besteht gewöhnlich aus Nutzdaten und einer aus den Nutzdaten entwickelten Signatur.

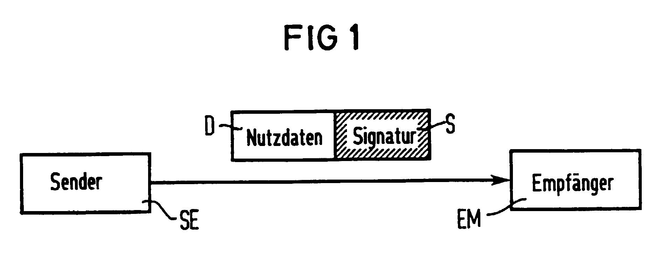

Die Signatur ist ein mit dem Absenderschlüssel verschlüsselter Extrakt der Nutzdaten. Mit Hilfe des Empfängerschlüssels kann dann festgestellt werden, ob die entschlüsselte Signatur aus den übertragenen Nutzdaten entwickelbar ist. Figur 1 zeigt dieses Prinzip. Die Nutzdaten D werden beim Sender SE vor dem Versenden mit einem Signierschlüssel digital unterschrieben. Es ergibt sich die Signatur S. Die Nutzdaten werden daraufhin zusammen mit der Signatur an den Empfänger EM übertragen. Der Empfänger EM überprüft mit Hilfe des korrespondierenden Verifikationsschlüssels die Integrität der aus Nutzdaten und Signatur bestehenden Nachricht und die Authentizität der Unterschrift.

Aus US-A-4 578 530 ist ein Verfahren bekannt, mit dem festgestellt werden kann, ob die übertragenen Nutzdaten unberechtigt geändert worden sind. Dazu werden Kopplungsdaten verwendet, die aus den Nutzdaten gewonnen werden und dann verschlüsselt übertragen werden. Nach diesem Verfahren ist es nicht möglich, festzustellen, ob ein potentieller Angreifer den Datenverkehr abhört und die abgehörten Daten samt Signatur beim Empfänger oder bei einer anderen Stelle, die in Besitz des Verifikationsschlüssels ist, wieder einspielt. Der Empfänger hat keine Möglichkeit zu erkennen, ob die empfangenen Daten original sind oder ob es sich um eine Wiedereinspielung handelt.

Das der Erfindung zugrundeliegende Problem besteht darin, ein Verfahren anzugeben, bei dem der Empfänger erkennen kann, ob die empfangenen Daten direkt vom Sender übertragene Daten oder von einem Angreifer unberechtigt eingespielte Daten sind Dieses Problem wird gemäß den Merkmalen des Patentanspruchs 1 gelöst.

Das erfindungsgemäße Verfahren beruht im wesentlichen auf einer symmetrischen Verschlüsselung der Signatur. Durch diese Verschlüsselung kann eine fälschungssichere Kopplung der Signatur an einen bestimmten Datenaustausch zwischen Sender und Empfänger erreicht werden.

Dazu ist es vorteilhaft, in den bei der Verschlüsselung der Signatur verwendeten Schlüssel sog. Kopplungsdaten eingehen zu lassen, anhand derer ein unberechtigtes Wiedereinspielen erkannt werden kann. Solche Kopplungsdaten können z.B. eine Kennzeichnung des Empfängers oder die Zeit der Datenübertragung sein. Die Kopplungsdaten können dem Empfänger im Klartext zur Überprüfung zusätzlich zu den Nutzdaten und der verschlüsselten Signatur übermittelt werden.

Um weiterhin eine unberechtigte Rückgewinnung der Originalsignatur zu verhindern, gehen in den Schlüssel zur Verschlüsselung der Signatur zusätzlich vom Sender erzeugte Zufallsdaten ein. Diese Zufallsdaten können ebenfalls an den Empfänger übertragen werden und zwar verschlüsselt. Zur Verschlüsselung der Zufallsdaten kann ein sog. Transferschlüssel verwendet werden, der sowohl ein symmetrischer als auch ein asymmetrischer Schlüssel sein kann.

Beim Sender kann ein Zufallszahlengenerator zur Verfügung stehen. Die Verschlüsselung der Signatur kann unter Verwendung einer für Sender und Empfänger gemeinsamen Einwegfunktion erfolgen, die auch öffentlich bekannt sein kann. Schließlich teilen sich Sender und Empfänger einen geheimen Schlüssel bei Einsatz symmetrischer Verschlüsselungsverfahren bzw. ein Schlüsselpaar bei Einsatz asymmetrischer Krypto- oder Verschlüsselungsverfahren.

Weiterbildungen der Erfindung ergeben sich aus den Unteransprüchen.

Anhand eines Ausführungsbeispieles, das in den Figuren dargestellt ist, wird die Erfindung weiter erläutert. Es zeigen
Figur 2 ein Prinzipbild der von Sender zu Empfänger übertragenen Nachricht,
Figur 3 ein Schema des senderseitigen Schutzalgorithmus,
Figur 4 ein Schema des empfängerseitigen Schutzalgorithmus.

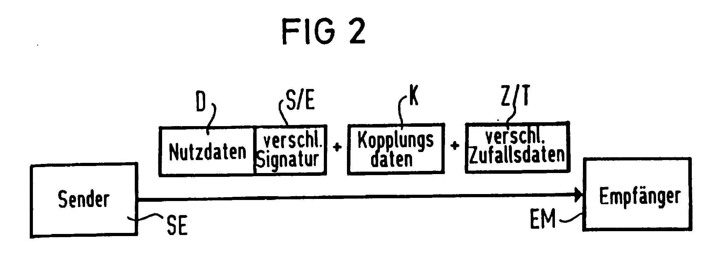

Ausgehend von Figur 1 und 2 sollen Nutzdaten D von einem Sender SE zu einem Empfänger EM übertragen werden. Auf der Senderseite stehen folgende Daten zur Verfügung: Nutzdaten D und die dazugehörige Signatur S sowie ein Transferschlüssel T, der eine vertrauliche Übermittlung der Zufallsdaten Z ermöglicht. Die Übertragung kann z.B. über eine Übertragungsleitung erfolgen. Um die Übertragung der Nutzdaten zu sichern, wird eine Signatur S verwendet, die zur verschlüsselten Signatur S/E umgewandelt worden ist. Zusätzlich zu den Nutzdaten D und der verschlüsselten Signatur S/E können Kopplungsdaten K und verschlüsselte Zufallsdaten Z/T zum Empfänger EM übertragen werden. Die vom Sender SE zum Empfänger EM übertragene Nachricht besteht somit aus Nutzdaten D, verschlüsselter Signatur S/E, Kopplungsdaten K und verschlüsselten Zufallsdaten Z/T.

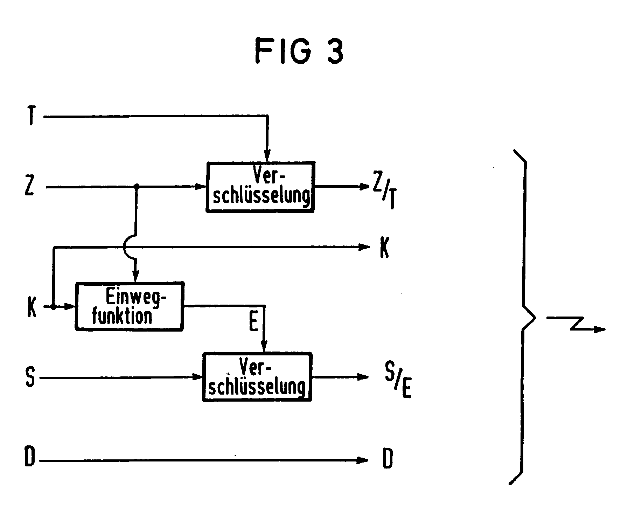

Nach Figur 3 wird die vom Sender SE zum Empfänger EM zu übertragende Nachricht auf folgende Weise erzeugt:
1. Zunächst werden Zufallsdaten Z von einem Zufallsdatengenerator beim Sender erzeugt.
2. Weiterhin werden Kopplungsdaten K festgelegt.
3. Aus einer Kombination von Zufallsdaten Z und Kopplungsdaten K wird durch Einwegverschlüsselung ein symmetrischer Schlüssel E erzeugt. Die dazu verwendete Einwegfunktion kann öffentlich bekannt sein.
4. Mit Hilfe des Schlüssels E wird die Signatur S symmetrisch verschlüsselt und die verschlüsselte Signatur S/E erzeugt.
5. Weiterhin werden mit Hilfe eines Transferschlüssels T die Zufallsdaten Z zu verschlüsselten Zufallsdaten Z/T verschlüsselt.
6. Anschließend kann die Nachricht vom Sender zum Empfänger übertragen werden, bestehend aus Nutzdaten D, verschlüsselter Signatur S/E, Kopplungsdaten K und verschlüsselten Zufallsdaten Z/T.

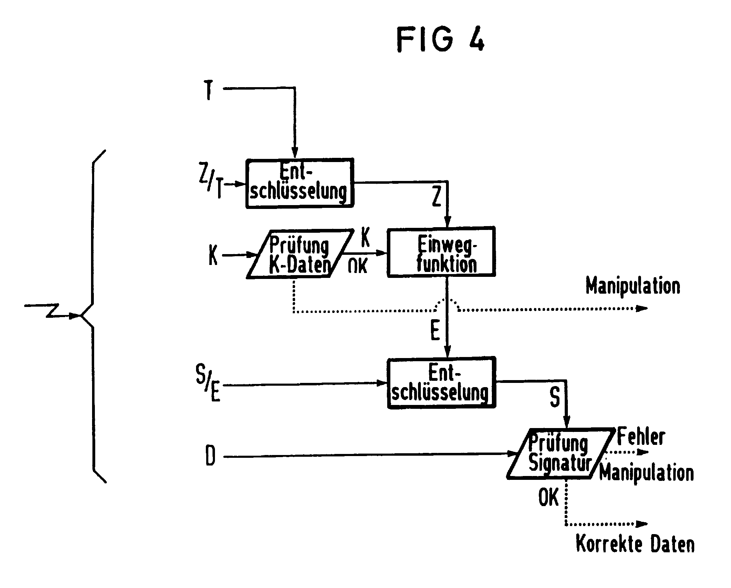

Nach Figur 4 stehen auf der Empfängerseite EM somit eine Nachricht zur Verfügung, die aus Nutzdaten D, verschlüsselter Signatur S/E, Kopplungsdaten K, verschlüsselten Zufallsdaten Z/T besteht, zusätzlich ist ein korrespondierender Transferschlüssel T gegeben.

Zur Überprüfung der übertragenen Nachricht werden nun folgende Schritte durchgeführt:
1. Die Kopplungsdaten K werden auf Plausibilität untersucht. Ergeben sich aus der Überprüfung Unstimmigkeiten, so wird die Nachricht zurückgewiesen. Bei der Plausibilitätsprüfung wird also geprüft, ob die Kopplungsdaten richtig sein können. Beispiele von Kopplungsdaten werden weiter unten behandelt.
2. Die Zufallsdaten Z werden durch Entschlüsselung der verschlüsselten Zufallsdaten Z/T mit Hilfe des Transferschlüssels T zurückgewonnen.
3. Aus den berechneten Zufallsdaten Z und den erhaltenen Kopplungsdaten K wird unter Verwendung einer Einwegverschlüsselung der verwendete symmetrische Schlüssel E bestimmt.
4. Durch Entschlüsselung der verschlüsselten Signatur S/E mit Hilfe des berechneten Schlüssels E wird die Signatur S zurückgewonnen.
5. Die Signatur S wird überprüft. Ergeben sich aus der Prüfung Fehler, so wird die Nachricht zurückgewiesen.

Die Kopplungsdaten K und die Zufallsdaten Z/T können nicht unerkannt gefälscht werden. Eine Fälschung wird spätestens bei der Überprüfung der Signatur durch den Empfänger EM bemerkt. Eine Modifikation der Kopplungsdaten K und der verschlüsselten Zufallsdaten Z/T führt nämlich beim Empfänger zu einem verfälschten symmetrischen Schlüssel E; die Entschlüsselung der verschlüsselten Signatur S/E mit dem verfälschten Schlüssel E' führt zu einer ungültigen Signatur S'. Dies wird schließlich beim Verifizieren der Signatur S' erkannt und als Fälschung zurückgewiesen.

Ein Wiedereinspielen der Nachricht kann anhand der Kopplungsdaten K vom Empfänger EM erkannt werden. Welche speziellen Wiedereinspielangriffe abgewehrt werden können, hängt von der Wahl der Kopplungsdaten ab. Anhand einiger Beispiele soll erläutert werden, wie sich bestimmte Einträge in die Kopplungsdaten auswirken.

Wenn die Kopplungsdaten aus einem leeren Eintrag bestehen, besteht eine implizite Kopplung der mit der Signatur versehenen Nutzdaten an die Besitzer des Transferschlüssels. Die abgehörten Daten können nicht unerkannt bei Systemen eingespielt werden, die nicht im Besitz des Transferschlüssels sind.

Die Kopplungsdaten können aus einem Eintrag des Empfängernamens bestehen. Dann kann der Empfänger überprüfen, ob die Nachricht wirklich für ihn bestimmt war oder ob die Nachricht ursprünglich an einen anderen Adressaten gerichtet war, abgehört und wieder eingespielt worden ist. Der Empfänger kann jedoch nicht überprüfen, ob die Nachricht schon früher einmal an ihn gesendet wurde.

Die Kopplungsdaten können aus einem Eintrag der Sendezeit bestehen. Jeder der Empfänger kann dann überprüfen, ob die Nachricht aktuell ist oder ob es sich um eine Wiedereinspielung älteren Datums handelt. Allerdings könnte der Datenverkehr abgehört und quasi zeitgleich an anderer Stelle wieder eingespielt werden.

Eine beliebige Kombination von verschiedenen Einträgen in die Kopplungsdaten ist möglich. Werden mehrere Einträge in den Kopplungsdaten kombiniert, so müssen sämtliche Einträge hinsichtlich ihrer Plausibilität überprüft werden. Nur wenn alle Prüfungen positiv ausfallen, wird die Nachricht anerkannt. Je mehr Informationen in den Kopplungsdaten mitgeschickt werden, desto stärker ist die Kopplung der unterschriebenen Daten an einen ganz bestimmten Auftrag.

Durch die Verwendung von Zufallsdaten Z, die in den Schlüssel E eingehen, kann festgestellt werden, ob die Nachricht auf dem Weg vom Sender zum Empfänger geändert worden ist. Da die Zufallsdaten verschlüsselt übertragen werden und bei der Bildung des Schlüssels E sowohl die Zufallsdaten als auch die Kopplungsdaten eingehen, kann jede Änderung der übertragenen Nachricht festgestellt werden.

Als Transferschlüssel kann sowohl ein symmetrischer als auch ein asymmetrischer Schlüssel verwendet werden. Für den Fall, daß beide Kommunikationspartner gegenseitig signierte Daten austauschen und dabei ein Public-Key-Verfahren benutzen, können die verwendeten Signier- und Verifikationsschlüssel auch als Transportschlüssel verwendet werden. Beim Verschlüsseln der Zufallsdaten auf der Senderseite dient der öffentliche Schlüssel des Empfängers als Transferschlüssel. Beim Entschlüsseln der Zufallsdaten auf der Empfängerseite dient der private Schlüssel des Empfängers als Transferschlüssel.

Das erfindungsgemäße Verfahren läßt sich auch auf Prüfsummen von Daten anwenden. Anstatt der Signatur wird die entsprechende Prüfsumme symmetrisch verschlüsselt. Die einzelnen Verfahrensschritte beim Verschlüsseln und Entschlüsseln der Prüfsumme bleiben unverändert.

## Patentansprüche

1. Verfahren zum Erkennen einer unberechtigten Wiedereinspielung beliebiger von einem Sender (SE) zu einem Empfänger (EM) übertragener Daten,
bei dem die Daten aus Nutzdaten (D) und einer aus den Nutzdaten entwickelten Signatur (S)bestehen,
bei dem die Signatur (S) symmetrisch verschlüsselt wird und der dazu verwendete Schlüssel (E) in Abhängigkeit von Kopplungsdaten (K) gebildet wird, die Informationen über den Übertragungsvorgang enthalten.

2. Verfahren nach Anspruch 1, bei dem die Kopplungsdaten (K) von der Zeit der Übertragung der Daten und/oder dem Empfänger abhängig sind.

3. Verfahren nach Anspruch 1 oder 2, bei dem die Kopplungsdaten (K) im Klartext an den Empfänger (EM) übertragen werden.

4. Verfahren nach einem der Ansprüche 1 bis 3, bei dem der Schlüssel (E) beim Sender (SE) zusätzlich von Zufallsdaten oder Pseudozufallsdaten (Z ) beeinflußt wird.

5. Verfahren nach Anspruch 4, bei dem die Zufallsdaten (Z) mit einem Transferschlüssel (T) verschlüsselt an den Empfänger (EM) übertragen werden.

6. Verfahren nach Anspruch 5,
- bei dem die Zufallsdaten (Z) erzeugt werden,
- bei dem die Kopplungsdaten (K) festgelegt werden,
- bei dem ein symmetrischer Schlüssel (E) durch Einwegverschlüsselung der Kombination der Zufallsdaten und der Kopplungsdaten erzeugt wird,
- bei dem die Signatur (S) mit Hilfe des Schlüssels (E) verschlüsselt wird,
- bei dem die Zufallsdaten (Z) mit dem Transferschlüssel (T) verschlüsselt werden,
- bei dem eine Nachricht bestehend aus den Nutzdaten (D), der verschlüsselten Signatur (S/E) den Kopplungsdaten (K) und den verschlüsselten Zufallsdaten (Z/T) versendet wird.

7. Verfahren nach Anspruch 6, bei dem auf der Empfängerseite die Kopplungsdaten (K) überprüft werden und bei Unstimmigkeit die Nachricht zurückgewiesen wird,
- bei dem die Zufallsdaten (Z) durch Entschlüsselung der erhaltenen verschlüsselten Zufallsdaten (Z/T) mit dem Transferschlüssel (T) zurückgewonnen werden,
- bei dem der symmetrische Schlüssel (E) durch Einwegverschlüsselung der Kombination aus den berechneten Zufallsdaten (Z) und erhaltenen Kopplungsdaten (K) bestimmt wird,
- bei dem die Signatur (S) durch Entschlüsselung der verschlüsselten Signatur (S/E) mit Hilfe des berechneten Schlüssels (E) zurückgewonnen wird,
- bei dem die Signatur (S) überprüft wird und bei Feststellung von Fehlern die Nachricht zurückgewiesen wird.

8. Verfahren nach einem der Ansprüche 5 bis 7,bei dem als Transferschlüssel (T) ein symmetrischer Schlüssel verwendet wird.

9. Verfahren nach einem der Ansprüche 5 bis 7, bei dem als Transferschlüssel (T) ein asymmetrischer Schlüssel verwendet wird, wobei nach dem Public-Key-Verfahren vorgegangen wird.

10. Verfahren nach einem der vorhergehenden Ansprüche, bei dem die Signatur durch eine Prüfsumme der Nutzdaten ersetzt wird.

11. Verfahren nach einem der vorhergehenden Ansprüche, bei dem die Nutzdaten durch Protokolldaten oder einer Kombination von Protokoll- und Nutzdaten ersetzt wird.

## Claims

1. Process for detecting unauthorized reinjection of any data transmitted by a transmitter (SE) to a receiver (EM),
in which the data comprise useful data (D) and a signature (S) developed from the useful data,
in which the signature (S) is symmetrically enciphered and the key (E) used for this purpose is formed as a function of coupling data (K) which contain information about the transmission procedure.

2. Process according to Claim 1, in which the coupling data (K) are dependent on the time of transmission of the data and/or on the receiver.

3. Process according to Claim 1 or 2, in which the coupling data (K) are transmitted in plain text to the receiver (EM).

4. Process according to one of Claims 1 to 3, in which the key (E) is additionally influenced at the transmitter (SE) by random data or pseudo-random data (Z).

5. Process according to Claim 4, in which the random data (Z) are transmitted to the receiver (EM) in enciphered form with a transfer key (T).

6. Process according to Claim 5,
- in which the random data (Z) are generated,
- in which the coupling data (K) are established,
- in which a symmetric key (E) is generated by one-way enciphering of the combination of random data and coupling data,
- in which the signature (S) is enciphered with the aid of the key (E),
- in which the random data (Z) are enciphered with the transfer key (T),
- in which a message comprising the useful data (D), the enciphered signature (S/E), the coupling data (K) and the enciphered random data (Z/T) is transmitted.

7. Process according to Claim 6, in which the coupling data (K) are checked on the receiver side and, if there is a discrepancy, the message is rejected,
- in which the random data (Z) are recovered by deciphering with the transfer key (T) the enciphered random data (Z/T) obtained,
- in which the symmetric key (E) is determined by one-way enciphering of the combination of the calculated random data (Z) and coupling data (K) obtained,
- in which the signature (S) is recovered by deciphering the enciphered signature (S/E) with the aid of the calculated key (E),
- in which the signature (S) is checked and, if errors are established, the message is rejected.

8. Process according to one of Claims 5 to 7, in which a symmetric key is used as the transfer key (T).

9. Process according to one of Claims 5 to 7, in which an asymmetric key is used as the transfer key (T), proceeding on the basis of the public-key method.

10. Process according to one of the preceding claims, in which the signature is replaced by a check sum of the useful data.

11. Process according to one of the preceding claims, in which the useful data are replaced by protocol data or a combination of protocol data and useful data.

## Revendications

1. Procédé permettant la détection d'une réinjection non autorisée de données quelconques transmises depuis un émetteur (SE) vers un récepteur (EM) dans lequel les données se composent de données utiles (D) et d'une signature déterminée à partir des données utiles, dans lequel la signature (S) est codée symétriquement et la clé (E) utilisée à cet effet est constituée en fonction de données de couplage (K) qui contiennent des informations sur le processus de transmission.

2. Procédé selon la revendication 1, dans lequel les données de couplage (K) dépendent du moment de la transmission des données et/ou du récepteur.

3. Procédé selon la revendication 1 ou 2, dans lequel les données de couplage (K) sont transmises en texte en clair au récepteur (EM).

4. Procédé selon l'une des revendications 1 à 3, dans lequel la clé (E) est de plus influencée dans l'émetteur (SE) par des données aléatoires ou pseudo-aléatoires (Z).

5. Procédé selon la revendication 4, dans lequel les données aléatoires (Z) sont transmises au récepteur (EM) de manière codée par une clé de transfert (T).

6. Procédé selon la revendication 5,
- dans lequel les données aléatoires (Z) sont générées,
- dans lequel les données de couplage (K) sont fixées,
- dans lequel une clé symétrique (E) est générée par codage unidirectionnel de la combinaison des données aléatoires et des données de couplage,
- dans lequel la signature (S) est codée à l'aide de la clé (E),
- dans lequel les données aléatoires (Z) sont codées avec la clé de transfert (T),
- dans lequel un message, comprenant les données utiles (D), la signature codée (S/E), les données de couplage (K) et les données aléatoires codées (Z/T) est envoyé.

7. Procédé selon la revendication 6, dans lequel, du côté du récepteur, les données de couplage (K) sont vérifiées et, en cas de divergence, le message est refusé,
- dans lequel les données aléatoires (Z) sont récupérées par décodage des données aléatoires (Z/T) codées reçues à l'aide de la clé de transfert T.
- dans lequel la clé symétrique (E) est déterminée par codage unidirectionnel de la combinaison des données aléatoires (Z) calculées et des données de couplage (K) reçues,
- dans lequel la signature (S) est récupérée par décodage de la signature codée (S/E) à l'aide de la clé calculée (E),
- dans lequel la signature (S) est vérifiée et le message est refusé si des erreurs sont constatées.

8. Procédé selon l'une des revendications 5 à 7, dans lequel une clé symétrique est utilisée comme clé de transfert (T).

9. Procédé selon l'une des revendications 5 à 7, dans lequel une clé asymétrique est utilisée comme clé de transfert (T) et dans lequel on procède selon la méthode Public-Key.

10. Procédé selon l'une des revendications précédentes dans lequel la signature est remplacée par un total de contrôle des données utiles.

11. Procédé selon l'une des revendications précédentes, dans lequel les données utiles sont remplacées par des données de protocole ou par une combinaison de données de protocole et de données utiles.
